# EUROPEAN PATENT APPLICATION

(11) **EP 1 353 277 A1**
(43) Date of publication of application: **15.10.2003**
(21) Application number: 02007827.5
(22) Date of filing: 08.04.2002
(51) Int. Cl.: G06F 17/30

(54) **Method and computer system for delta-handling in server-pages**

(71) Applicant: SAP Aktiengesellschaft, 69190 Walldorf (DE)
(72) Inventor: Goerke, Björn, 69242 Mühlhausen (DE); McKellar, Brian, 69126 Heidelberg (DE)

(57) **Abstract**

Method, system and computer program product for delta-handling. A server (901) stores a page-document (151) that comprises at least one component (151-1, 151-2, 151-3). The page-document (151) is translated (210) into a browser-document that is visualized by a client (900). The server (901) receives a request (989) from the client (900) resulting in an update of a specific component (151-2) of the page-document (151) with an application-delta (151-2d). The specific component (151-2) has a writer-function (161-2). The server (901) generates (420) a browser-delta (150-2d) by applying the writer-function (161-2) to the application-delta (151-2d). The server (901) sends (430) the browser-delta (151-2d) to the client (900) for updating (520) the browser-document (150) on the client (900).

## Description

### Field of the Invention

The present invention generally relates to electronic data processing, and more particularly, relates to method, computer program product and system for client-server communication.

### Background of the Invention

Server-pages (also referred to as pages hereinafter), such as JAVA Server-pages (JSP), that include relevant information for a graphical user interface (GUI) are typically generated on a server. The result is a browser-document that the server transmits to a client, At the client, the browser-document is visualized for a user via a conventional browser, such as the Microsoft Internet Explorer. When the user interacts with the client via the GUI to refresh the page, the whole process is repeated. This requires a high bandwidth of the computer network that connects the client to the server because the whole page (layout information and data) is re-generated on the server and the resulting browser-document is re-transmitted from the server to the client via the network. Further, the user is confronted with undesired effects, such as waiting time and screen flicker, until the refreshed page is finally presented on the client.

Some conventional browsers, such as the Microsoft Internet Explorer IE 6.0, include a feature for flicker-free rendering. When the client receives a modified page, the browser identifies modified components of the page and only replaces these components instead of the whole page (for example, by dynamic HTML injection into the page's document object model DOM). This leads to a reduction of screen-flicker for the user but still requires bandwidth for transmission of the whole page from the server to the client.

There is an ongoing need to reduce bandwidth requirements in client-server communication and reduce undesired effects for the user at the same time.

### Summary of the Invention

Therefore, it is an objective of the present invention to provide methods, computer program products and computer systems to reduce bandwidth requirements in client-server communication when refreshing pages.

To meet this objective, preferred embodiments of the present invention provide the following features.

In a server-side embodiment of the present invention, a server stores a page-document that includes at least one component. The page-document is translated into a browser-document that is visualized by a client.

The server receives a request from the client that results in an update of a specific component of the page-document with an application-delta. The specific component has a writer-function.

The server generates a browser-delta by applying the writer-function to the application-delta.

The server sends the browser-delta to the client for updating the browser-document on the client.

In a client-side embodiment of the present invention, a client visualizes a browser-document that is derived from a page-document stored on a server.

The client receives a browser-delta from the server. A specific page-component of the page-document has a writer-function that generates the browser-delta on the server by applying the writer-function to a corresponding application-delta.

The client updates the browser-document with the browser-delta.

It is an effect of the present invention that the required bandwidth for network communication is lower when compared to prior art systems where the whole browser-document is exchanged between the server and client instead of a browser-delta. Often only a minor portion of the browser-document is modified. In this case the browser-delta transmission requires significant less bandwidth than the whole browser-document transmission.

It is a further effect of the present invention that the browser-delta is determined by a writer-function of the corresponding page-component. Therefore, the page component determines the granularity of the browser-delta. High granularity (e.g. on the level of a single character) can be useful, when dealing with complex page-components, such as nested tables, where only a minor part of the component is subject to modification and the major part of the component represents static information.

It is a further effect of the present invention that a user who interacts with the client experiences an eye pleasing effect because the update of the browser-document with the browser-delta results in a flicker-free change of the graphical user interface.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of an exemplary computer system, that implements embodiments of the present invention;
- FIG. 2: illustrates an implementation of a graphical user interface in one embodiment of the present invention at three consecutive time points;
- FIG. 3: illustrates interaction of a server and a client that are operated according to one embodiment of the present invention;
- FIGS. 4A, 4B: illustrate details of generating a browser-delta on the server;
- FIG. 5: illustrates updating a browser-document with the browser-delta on the client;
- FIGS. 6A, 6B: illustrate a method and a complementary method for delta-handling.

### Detailed Description of the Invention

Wherever possible, the same reference numbers will be used throughout the drawings to refer to the same or like parts. For convenience of explanation a list of references is provided prior to the claims.

Definitions of terms, as used herein after:
client:
   client computer in a computer system.
server:
   server computer in the computer system.
application data:
   data relating to an application (e.g. customer number, address, phone number, etc.).
layout data:
   data being used for configuration of a graphical user interface (GUI).
page-document:
   a document including data, such as application data or layout data. For example, a page document can be a Java Server Page (JSP), a Business Server Page (BSP) or an Active Server Page (ASP).
browser-document:
   a document that can be processed and visualized by a conventional browser.
tag:
   representation of a page-component in a page. For example, in Java server pages (JSP) tags use XML notation and represent a Java class.
writer-function:
   function of a class that corresponds to a page-component and provides a browser-delta for the page-component as output. The class is written in an object oriented programming language, such as Java, C++, ABAP Objects or any other object oriented programming language.
output-stream:
   data structure to collect the output of writer-functions.
document object model:
   according to the corresponding W3C definition, the Document Object Model (DOM) provides a mechanism to access and manipulate parsed HTML and XML content.

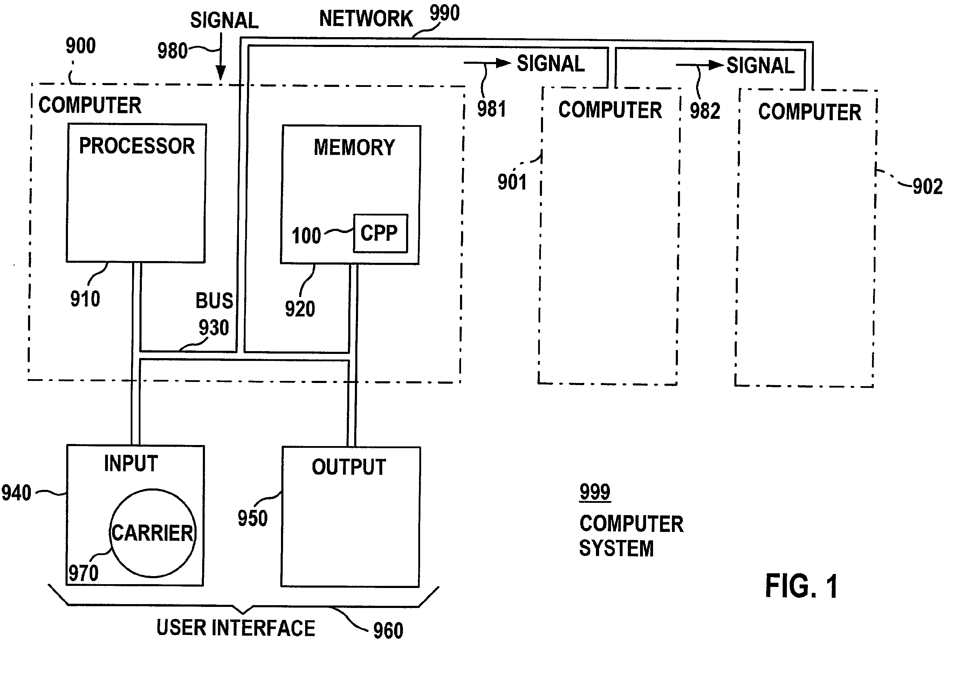

FIG. 1 illustrates a simplified block diagram of an exemplary computer system, that implements embodiments of the present invention. Computer system 999 includes computer 900 and has a plurality of further computers 901, 902 (or 90q, with q=0...Q-1, Q any number).

Computer 900 can be connected to further computers 901, 902 via computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, such as a hard disk, a floppy disk, or other magnetic disk, a tape, a cassette tape; (b) optical media, such as optical disk (CD-ROM, digital versatile disk - DVD); (c) semiconductor media, such as DRAM, SRAM, EPROM, EEPROM, memory stick, or by any other media, such as paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and-optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, such as Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.
Computer and program are closely related. As used hereinafter, phrases, such as "the computer provides" and "the program provides", are convenient abbreviation to express actions by a computer that is controlled by a program.

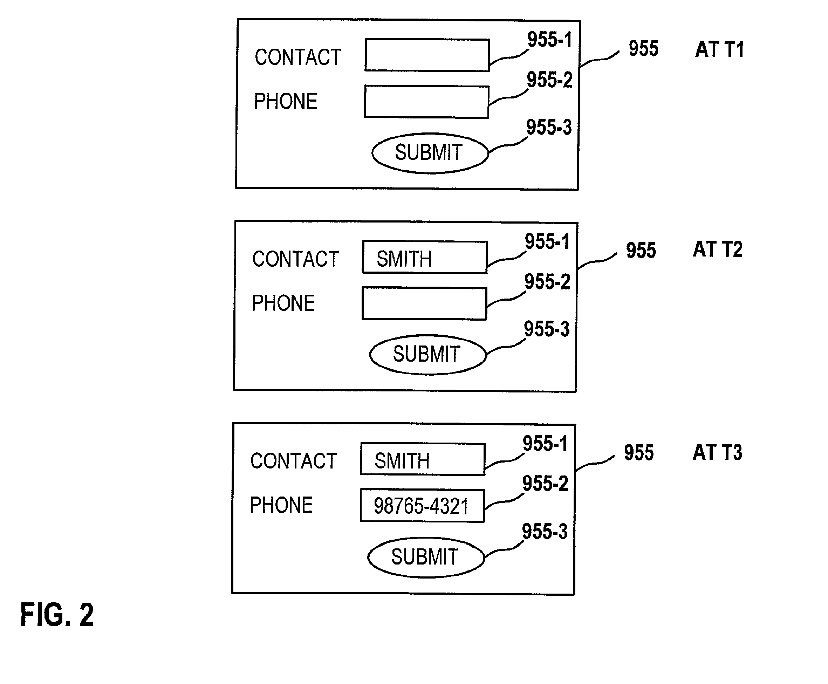

FIG. 2 illustrates an implementation of a graphical user interface 955 according to one embodiment of the present invention at three consecutive time points T1, T2 and T3.

For convenience of explanation, the following example of a user's interaction with graphical user interface 955 is used throughout the description to further explain the present invention. However, any graphical user interface can be implemented according to the present invention. Preferably, GUI 955 is presented to the user on output device 950 (cf. FIG. 1) and the user interacts with GUI 955 via input device 940.

GUI 955 is a user interface (form) that allows the user to retrieve a phone number 955-2 for a contact person 955-1 from a corresponding application database (not shown). The user is prompted with form-components 955-1, 955-2, 955-3. Contact component 955-1 is an input field where the user can enter the name of the contact person. Submit component 955-3 can be implemented as a button that is pressed by the user to send a request for the contact person's phone number to the corresponding application. Phone component 955-2 is an output field where the search result (phone number of the contact person) is presented to the user.

At T1, the user gets prompted with form 955, wherein contact component 955-1 and phone component 955-2 are empty.

The user then enters the name (e.g. SMITH) of the contact person into contact component 955-1 and, at T2, uses submit component 955-3 (e.g. submit-button) to send a request for the contact person's phone number to the corresponding application.

At T3, the application has identified the contact person's phone number (e.g. 98765-4321) and the result is visualized for the user in phone component 955-2.

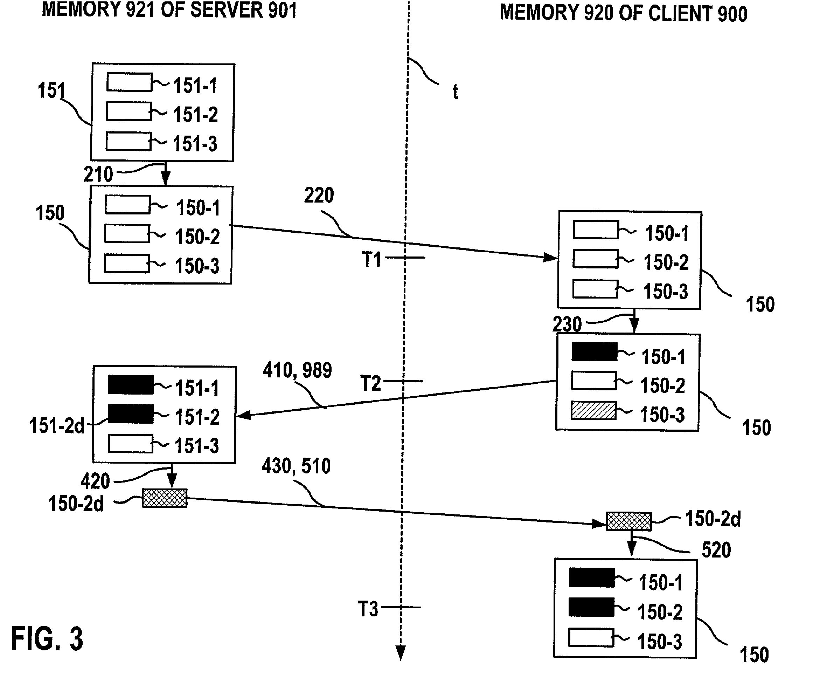

FIG. 3 illustrates interaction of computers 900, 901 when operated according to one embodiment of the present invention.

Time scale t (dashed arrow) is used to indicate the chronological order of events. However, time scale t does not increase linearly and, therefore, does not indicate the length of specific time intervals (e.g. (T1,T2)). Time points T1, T2, T3 (cf. FIG. 2) are shown as reference time points in the flow of events. Solid arrows represent specific events or signals.

The left side of time scale t shows objects that are stored in memory 921 of computer 901. In the example, computer 901 is a server computer that accesses application data, such as contact person or phone number.

The right side of time scale t shows objects that are stored in memory 920 of complementary computer 900. In the example, computer 900 is a client computer that presents application data to the user via GUI 955 (cf. FIG. 2).

Memory 921 stores page-document 151. Page-document 151 includes information to generate form 955 (cf. FIG. 2). For example, page-document 151 is a page, such as a Java Server-page (JSP), a Business Server-page (BSP) or an Active Server-page (ASP). Page-document 151 includes page-components 151-1, 151-2, 151-3 that correspond to form-components 955-1, 955-2, 955-3 in the example of FIG. 2, respectively.

Server 901 translates 210 page-document 151 into browser-document 150. For example, browser-document 150 is a markup language document, such as an HTML, XML, XHTML or WML document, which can be processed and visualized by a conventional browser. Browser-document 150 includes browser-components 150-1, 150-2, 150-3 that correspond to page-components 151-1, 151-2, 151-3, respectively.

Server 901 then sends browser document 150 to client 900 where it is stored in memory 920 and visualized 220 at T1 as form 955 via output device 950.

As described under FIG. 2, the user then enters the name (e.g. SMITH) of the contact person into contact component 955-1. Client 900 fills the corresponding browser-component 150-1 with the contact person name accordingly (illustrated by dark fill colour). At T2, client 900 submits request 989 for the contact person's phone number to server 901. For example, the user presses submit-component 955-3 and memory 920 stores a corresponding status (illustrated by a diagonal grid pattern) for the browser-component 150-3.

Server 901 receives 410 request 989. For example, server 901 accesses an application (e.g. an address database) and retrieves the requested phone number from the application. Server 901 updates corresponding page-component 151-2 in page-document 151 with application-delta 151-2d (illustrated by dark fill colour). In the example, application-delta 151-2d corresponds to phone number "98765-4321". Further application-deltas for other page-components can be generated substantially simultaneously if indicated by request 989.

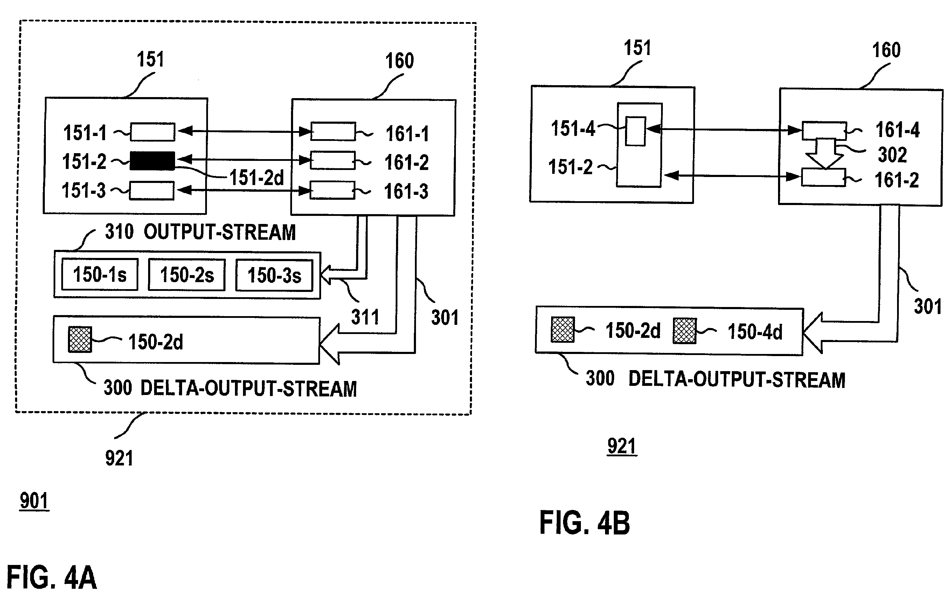

Then, server 901 generates 420 browser-delta 150-2d by applying a corresponding writer-function 161-2 (cf. FIG. 4) to application-delta 151-2d. Writer-function 161-2 is explained in detail under FIG. 4.

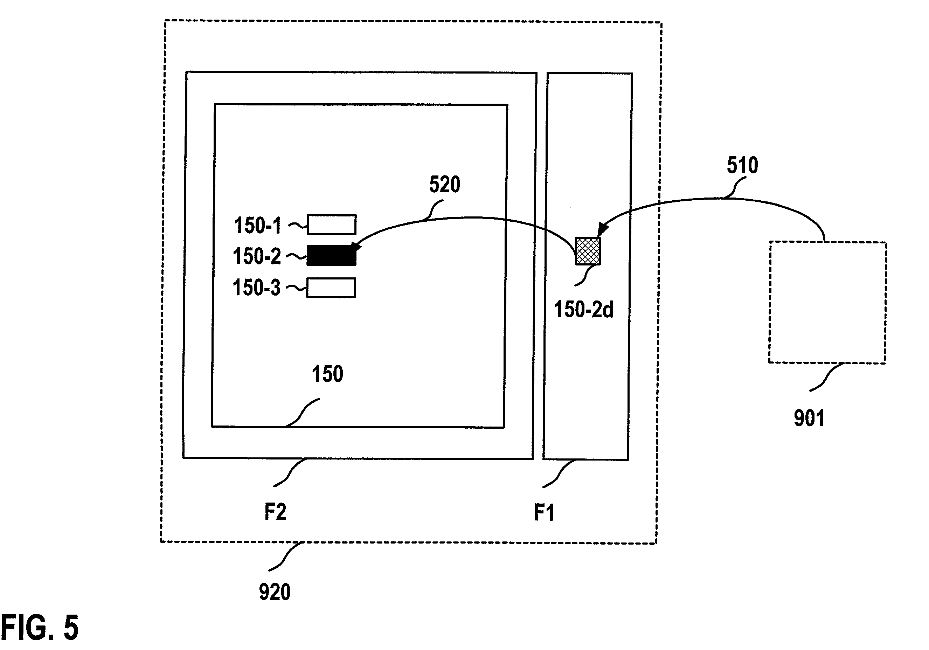

Then, server 901 sends 430 browser-delta 151-2d to client 900. Browser-delta 151-2d is stored in memory 920 after being received 510 by client 900. Client 900 uses browser-delta 151-2d to update 520 corresponding browser-component 150-2 (illustrated by dark fill colour) in browser-document 150. An embodiment of an implementation example for updating 520 browser-document 150 is explained in detail under FIG. 5. At T3, the contact person's phone number (e.g. 98765-4321) is visualized for the user in phone component 955-2 that corresponds to updated browser-component 150-2.
FIGS. 4A, 4B illustrate details of an example for generating 420 browser-deltas on server 901.

In FIG. 4A, memory 921 (dashed frame) of server 901 stores page-document 150 and writer-function-pool 160. In the example, each page-component 151-1, 151-2, 151-3 has a corresponding writer-function 161-1, 161-2, 161-3 of writer-function-pool 161 assigned (illustrated by double arrows) to it. In the following, writer-function 161-2 of page-component 151-2 is explained in detail. Other writer-functions work in an equivalent way for their corresponding page-components.

When server 901 translates page-document 151 into browser-document 150, writer-function 161-2 identifies application-delta 151-2d of page-component 151-2 and generates 420 (cf. FIG. 3) corresponding browser-delta 150-2d. In other words, writer-function 161-2 is able to identify any change (e.g. application-delta 151-2d illustrated by dark fill colour) of page-component 151-2 since the previous translation 210 (cf. FIG. 3) of page-document 151 and to separate the corresponding browser-delta 151 from the static browser-component part 150-2s.

Advantageously, writer-function 161-2 knows the structure of page-component 151-2 and also knows where application-deltas are to be expected and which parts of the page-component have a static character. In other words, writer-function 161-2 knows which portions of browser-component 150-2 can include browser-deltas that correspond to the application-deltas of page-component 151-2. Therefore, for browser-delta generation writer-function 161-2 can scan portions in browser-component 150-2 that correspond to possible application-deltas. This is faster than scanning browser-component 150-2 completely.

Preferably, writer-function 161-2 writes 301 browser-delta 150-2d to delta-output-stream 300. Static parts 150-2s of browser-component 150 are written 311 to output-stream 310, which can be the standard output stream for browser-document 150.

Optionally, server 901 can generate a browser-delta in delta-output-stream 300 for each page-component 151-1, 151-2, 151-3 having a corresponding writer-function 161-1, 161-2, 161-3 that is applied to a corresponding application-delta. In the example, the assumption is that only page-component 151-2 was changed, whereas the other page-components 151-1, 151-3 remain unchanged and, therefore, result in static browser-component parts 150-1s, 150-3s in output-stream 310.

Writer-function 161-2 is now further explained by using a specific JSP implementation of page-document 151. The page-document 151 is using an XML-notation to specify tags in the page. Each page-component corresponds to a tag in the page. The tag is represented by an XML element with attributes. The XML element represents an interface to a class (e.g. a Java class). Writer-function 161-2 is a function of this class.

Table 1 shows a simplified coding section of page 151 for the example of FIG. 2. Line 1 defines Java as page language. Line 2 defines a namespace "htmlb". Tags within that namespace are implemented in a so called tag library (taglib). Lines 4/8 define the start/end of the page content definition section. Line 5 defines an empty (blank value) input field for the name of a contact person (corresponding to tag 151-1). Line 6 defines an empty output field for the contact person's phone number (corresponding to tag 151-2) because no phone number is stored in value variable value="<%=phone%> at that time.

**Table 1:**

| simplified example of page-document 151 when implemented as Java Server-page. | |
|---|---|
| **line** | **simplified coding** |
| 1 | <%@page language="Java"%> |
| 2 | <%@taglib uri="http:/..." prefix="htmlb"%> |
| 3 | ... |
| 4 | <htmlb:page> |
| 5 | <htmlb:inputField id="contact" value="<%=contact%>" /> |
| 6 | <htmlb:inputField id="phone" value="<%=phone%>" /> |
| 7 | <htmlb:button id="submitButton" text="Submit" onClick="HandleSubmit" /> |
| 8 | </htmlb:page> |
| 9 | ... |

Line 7 defines a submit button (corresponding to tag 151-3) that the user can use to launch a request for a phone number.

When page 151 is rendered 210 for the first time, server 901 generates from tag 151-2 (cf. table 1, line 6) the corresponding Java class that is compiled and then executed to generate browser-component 150-2 as, for example, corresponding HTML statements. For convenience of explanation, other page-components (tags) of page-document 151 are not considered in this example but can be implemented by those skilled in the art according to the example that is given below. An HTML example of browser-component 150-2 in browser-document 150 as known in the art is shown in table 2. The HTML statements are preferably written 311 into output-stream 310.

**Table 2:**

| HTML example of browser-component 150-2 in browser-document 150. | |
|---|---|
| 1 | ... |
| 2 | <input id="phone" name="phone" type="text" value="" /> |
| 3 | ... |

Before page 151 is rendered a second time, the value variable (value="<%=phone%>", cf. table 1 line 6) of tag 151-2 is changed because the phone number 98765-4321 was identified and is now stored in the corresponding value variable. For convenience of explanation, changes in tag 151-1 are not further discussed in the following.

In the example, writer-function 161-2 is a function of the Java class that corresponds to page-component 151-2. Advantageously, writer-function 161-2 knows that the value attribute (application-delta 151-2d) of the tag "inputField" is subject to modification and, therefore, generates 420 browser-delta 150-2d from the changed "inputField" tag. In one embodiment of writer-function 161-2, the following HTML (cf. table 3) statement 150-2d is generated 420.

**Table 3:**

| HTML example of browser-delta 150-2d. |
|---|
| <input id="phone" name="phone" type="text" value="98765-4321" /> |

Preferably, writer-function 161-2 writes 301 HTML statement 150-2d to delta-output-stream 300. Static browser-component parts (e.g. 150-1s, 150-2s, 150-3s) are written 311 into output-stream 310. In other words, each tag can separate its browser-deltas from its unmodified parts and a delta-handler selects an appropriate output-stream. An example for the delta-handler is a Java class that is represented by a corresponding tag (e.g. <namespace:deltaHandler>, wherein the namespace can refer to any tag library). For example, the delta-handler can be implemented via function-pool 160. Preferably, the start/end tags of the delta-handler are inserted in lines 3/9 of table 1, respectively.

In a preferred embodiment of the present invention, server 901 stores two versions of page-document 151 in memory 921. A first version (cf. table 1) corresponds to the page-document that is sent to client 900 before the user interacts with client 900. The second version (cf. modified line 6 of table 1) includes all application-deltas that result from the user's interaction with the client 900. The delta-handler then compares the first version with the second version. In case that the delta-handler identifies additional application-deltas in the second version, the corresponding browser-deltas are written to the delta-output-stream 300.

It is an effect of the present invention that application-deltas can be defined for each tag with any granularity. For example, browser-delta 150-2d that is generated through writer-function 161-2 from the example of table 1 can even be at the level of tag attributes, such as the value attribute. In this case, in an alternative embodiment of writer-function 161-2, browser-delta 150-2d can be a Java Script statement, as illustrated in table 4:

**Table 4:**

| Java Script example of browser-delta 150-2d. |
|---|
| <SCRIPT language="JavaScript"> |
| document.all.item("phone").value = "98765-4321"; |
| </SCRIPT> |

The Java Script statement is used at client 900 to replace the corresponding value of the phone number in the document object model of browser-document 150 that is stored in memory 920 of client 900.

High granularity with respect to application-deltas results in small data packages for the corresponding browser-deltas, which considerably reduces the amount of data that need to be exchanged between server 901 and client 900.

FIG. 4B shows an example of a page implementation that uses nested tags. A parent-tag 151-2 (e.g. a table) can have child-tags 151-4 (e.g. cells). A writer-function 161-4 of child-tag 151-4 can write 302 a corresponding browser-delta 150-4d to the writer-function 161-2 of parent-tag 151-2 instead of writing it directly to delta-output-stream 300 or output-stream 310. The parent-tag 151-2 collectively writes all browser-deltas (e.g. 150-4d) of its child-tags to delta-output-stream 310.
FIG. 5 illustrates updating browser-document 150 with browser-delta 150-2d on client 900.

Memory 920 of client 900 stores first frame F1 and second frame F2. When browser-delta 150-2d is received 510 from server 901, memory 920 stores browser-delta 150-2d in first frame F1. Advantageously, first frame F1 is not visualized on output device 950 (cf. FIG. 2). For example, the width of first frame F1 can be limited to a single pixel.

Client 900 then updates 520 browser-document 150, which is stored in visualized second frame F2. For example, a person skilled in the art can achieve the update 520 by replacing modified parts of browser-component 150-2 with corresponding browser-delta 150-2d (illustrated by dark fill colour) in the document object model (DOM) of browser-document 150. Equivalent techniques to inject browser-delta 150-2d into browser-document 150 can be used as well.

It is an effect of the present invention that client 900 performs updating 520 without causing screen-flicker of form 955 (cf. FIG. 2) for the user.

It is a further effect of the invention that client 900 switches the roles of first frame F1 and second frame F2, when a full page is received instead of a browser-delta. In other words, when the user interacts with the client in a way that a new browser-document instead of a browser-delta for the current browser-document is requested from server 901, client 900 receives the new page in first frame F1. Then, client 900 recognizes the new page. Substantially simultaneously client 900 reduces the size of second frame F2 (so that it becomes invisible for the user) and expands the size of first frame F1 to the previous size of second frame F2. This procedure is faster than updating second frame F2 with the new page received in first frame F1 resulting in less screen flicker and waiting time for the user. Second frame F2 now has the role of a receiver frame for browser-deltas.
After having described examples of embodiments of the present invention in detail, it is now summarized as two complementary computer-implemented methods. A server computer program 101 (cf. FIG.1) executed by server 901 (cf. FIG 1) implements method 400. A client computer program 100 (cf. FIG. 1) executed by client 900 implements complementary method 500. Computer programs 100, 101 are stored on corresponding data carriers 970, 971 (cf. FIG. 1) of carried by corresponding signals 980, 981 (cf. FIG. 1).

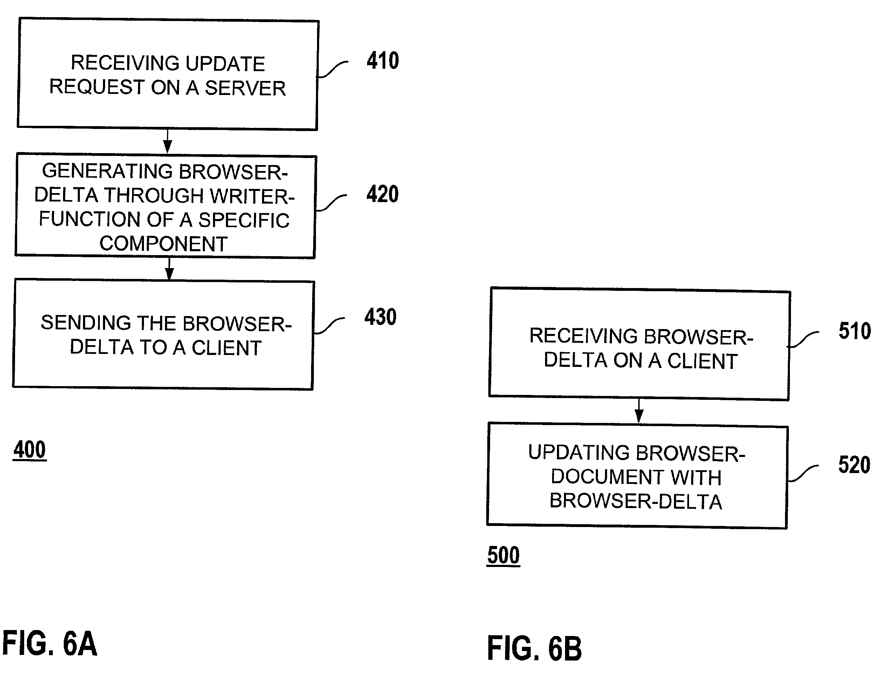

FIGS. 6A, 6B illustrate method 400 and complementary method 500 for delta-handling.

FIG. 6A shows method 400 for delta-handling on server 901. Page-document 151 (cf. FIG. 3) is stored on computer 901 and includes at least one component 151-1, 151-2, 151-3 (cf. FIG. 3). Page-document 151 is translated 210 (cf. FIG. 3) into browser-document 150 (cf. FIG. 3) that is visualized by complementary computer 900 (client). Method 400 includes the steps:

Receiving 410 request 989 from complementary computer 900 resulting in an update of specific component 151-2 of page-document 151 with application-delta 151-2d. Specific component 151-2 has writer-function 161-2.

Generating 420 browser-delta 150-2d by applying writer-function 161-2 to application-delta 151-2d.

Sending 430 browser-delta 151-2d to complementary computer 900 for updating browser-document 150 on complementary computer 900.

A preferred embodiment of writer-function 161-2 uses delta-output-stream 300 for browser-delta 150-2d.

Optionally, specific component 151-2 has sub-component 151-4, which has further writer-function 161-4. Further writer-function 161-4 generates further browser-delta 150-4d on delta-output-stream via writer-function 161-4 of specific component 151-2.

FIG. 6B illustrates computer-implemented method 500 for delta-handling on client 900. Browser-document 150 is visualized by client 900. Browser-document 150 is derived from page-document 151 that is stored on server 901 and includes at least one component 151-1, 151-2, 151-3. Method 500 includes the following steps:

Receiving 510 browser-delta 151-2d from server 901, wherein specific component 151-2 has writer-function 161-2 that is applied to corresponding application-delta 151-2d to generate browser-delta 151-2d on server 901.

Updating 520 browser-document 150 with browser-delta 151-2d.

In a preferred embodiment browser-delta 151-2d is received 510 by first frame F1 and browser-document 150 is updated 520 with browser-delta 151-2d in second frame F2.

| Reference numbers | |
|---|---|
| **Reference** | **Description** |
| 100/101 | Computer program products |
| 150 | Browser-document |
| 150-1 to 150-3 | Browser-components |
| 150-2d, 150-4d | Browser-deltas |
| 151 | Page-document |
| 151-1 to 151-4 | Page-components |
| 161-1 to 161-3 | Writer-fucntions |
| 300 | Delta-output-stream |
| 310 | Output-stream |
| 400, 500 | Methods |
| 4xx, 5xx | Method steps |
| 999 | Computer system |
| 900, 901, 902 | Computers |
| 910, 911, 912 | Processors |
| 920, 921, 922 | Memories |
| 940 | Input device |
| 950 | Output device |
| 955 | Graphical user interface (GUI) |
| 955-1 to 955-3 | Layout components |
| 960 | User interface |
| 970, 971 | Program carriers (computer readable devices) |
| 980, 981 | Program signals |
| 989 | Request |

## Claims

1. A method (400) for delta-handling on a server (901) storing a page-document (151) that comprises at least one component (151-1, 151-2, 151-3); the page-document (151) being translated (210) into a browser-document (150) that is visualized by a client (900); the method (400) comprising the following steps:
receiving (410) a request (989) from the client (900) resulting in an update of a specific component (151-2) of the page-document (151) with an application-delta (151-2d), wherein the specific component (151-2) has a writer-function (161-2);
generating (420) a browser-delta (150-2d) by applying the writer-function (161-2) to the application-delta (151-2d); and
sending (430) the browser-delta (151-2d) to the client (900) for updating the browser-document (150) on the client (900).

2. The method (400) of claim 1, wherein the page-document (151) is a page selected from the group of Java Server-page, Business Server-page, Active Server-page.

3. The method (400) of claim 1, wherein the browser-document (151) is a markup language document.

4. The method (400) of claim 2, wherein the specific component (151-2) is a tag within the page-document (151).

5. The method (400) of claim 4, wherein the writer-function (161-2) is a function of a class that corresponds to the specific component (151-2), wherein the class is written in an object-oriented programming language.

6. The method (400) of claim 1, wherein the writer-function (161-2) generates the browser-delta (151-2d) in a markup language.

7. The method (400) of claim 1, wherein in the generating (420) step, the writer-function (161-2) uses a delta-output-stream (300) for the browser-delta (150-2d) .

8. The method (400) of claim 7, wherein the specific component (151-2) has a sub-component (151-4) having a further writer-function (161-4) that generates a further browser-delta (150-4d) on the delta-output-stream via the writer-function (161-4) of the specific component (151-2).

9. A method (500) for delta-handling on a client (900) visualizing a browser-document (150) that is derived from a page-document (151) stored on a server (901); the method (500) comprising the following steps:
receiving (510) a browser-delta (151-2d) from the server (901), wherein a specific page-component (151-2) of the page-document (151) has a writer-function (161-2) that generates the browser-delta (151-2d) on the server (901) by applying the writer-function (161-2) to a corresponding application-delta (151-2d) ;
updating (520) the browser-document (150) with the browser-delta (151-2d).

10. The method (500) of claim 9, wherein the browser-delta (151-2d) is received (510) by a first frame (F1) and the browser-document (150) is updated (520) with the browser-delta (151-2d) in a second frame (F2).

11. A computer program product (101) for delta-handling on a server (901), wherein the server (901) stores a page-document (151) that comprises at least one component (151-1, 151-2, 151-3) and the page-document (151) is translated (210) into a browser-document (150) that is visualized by a client (900); the computer program product (101) being embodied by a data carrier (971) or carried by a signal (981) and having a plurality of instructions for causing at least one processor (911) of the server (901) to execute the following steps:
receiving (410) a request (989) from the client (900) resulting in an update of a specific component (151-2) of the page-document (151) with an application-delta (151-2d), wherein the specific component (151-2) has a writer-function (161-2);
generating (420) a browser-delta (150-2d) by applying the writer-function (161-2) to the application-delta (151-2d); and
sending (430) the browser-delta (151-2d) to the client (900) for updating the browser-document (150) on the client (900).

12. The computer program product (101) of claim 11, wherein the writer-function (161-2) is a function of a class that corresponds to the specific component (151-2), wherein the class is written in an object-oriented programming language.

13. The computer program product (101) of claim 11, wherein in the generating (420) step, the writer-function (161-2) uses a delta-output-stream (300) for the browser-delta (150-2d).

14. The computer program product (101) of claim 13, wherein the specific component (151-2) has a sub-component (151-4) having a further writer-function (161-4) that generates a further browser-delta (150-4d) on the delta-output-stream via the writer-function (161-4) of the specific component (151-2).

15. A computer program product (100) for delta-handling on a client (900) visualizing a browser-document (150) that is derived from a page-document (151) stored on a server (901); the computer program product (100) being embodied by a data carrier (970) or carried by a signal (980) and having a plurality of instructions for causing at least one processor (910) of the client (900) to execute the following steps:
receiving (510) a browser-delta (151-2d) from the server (901), wherein a specific page-component (151-2) of the page-document (151) has a writer-function (161-2) that generates the browser-delta (151-2d) on the server (901) by applying the writer-function (161-2) to a corresponding application-delta (151-2d) ;
updating (520) the browser-document (150) with the browser-delta (151-2d).

16. The computer program product (100) of claim 15, wherein the browser-delta (151-2d) is received (510) by a first frame (F1) and the browser-document (150) is updated (520) with the browser-delta (151-2d) in a second frame (F2).

17. A computer system (999) for delta-handling comprising:
a server (901), wherein the server (901) stores a page-document (151) that comprises at least one component (151-1, 151-2, 151-3) and the page-document (151) is translated (210) into a browser-document (150) that is visualized by a client (900); the server (901) receiving (410) a request (989) from the client (900) resulting in an update of a specific component (151-2) of the page-document (151) with an application-delta (151-2d), wherein the specific component (151-2) has a writer-function (161-2); the server (901) generating (420) a browser-delta (150-2d) by applying the writer-function (161-2) to the application-delta (151-2d); the server (901) sending (430) the browser-delta (151-2d) to the client (900); and
the client (900) receiving (510) the browser-delta (151-2d) from the server (901) and updating (520) the browser-document (150) with the browser-delta (151-2d).

18. The computer system (999) of claim 17, wherein the client (900) receives (510) the browser-delta (151-2d) in a first frame (F1) and the browser-document (150) is updated (520) with the browser-delta (151-2d) in a second frame (F2).

19. The computer system (999) of claim 17, wherein the writer-function (161-2) is a function of a class that corresponds to the specific component (151-2), and the class is written in an object-oriented programming language.

20. A server (901) for delta-handling comprising:
a network (990) connection for receiving (410) a request (989) from a client (900) ;
a memory (921) storing a page-document (151) that comprises at least one component (151-1, 151-2, 151-3) and is visualized by a client (900) ; and
a processor (911) translating (210) the page-document (151) into a browser-document (150) stored in the memory (921); the processor (911) processing the request (989) resulting in an update of a specific component (151-2) of the page-document (151) with an application-delta (151-2d), wherein the specific component (151-2) has a writer-function (161-2); the processor (911) generating (420) a browser-delta (150-2d) in the memory (921) by applying the writer-function (161-2) to the application-delta (151-2d); and sending (430) the browser-delta (151-2d) to the client (900) for updating the browser-document (150) on the client (900).

21. The server (999) of claim 20, wherein the writer-function (161-2) is a function of a class that corresponds to the specific component (151-2), and the class is written in an object-oriented programming language.

22. A client (900) for delta-handling comprising:
a network (990) connection for receiving (510) a browser-delta (151-2d) from a server (901);
a memory (920) storing a browser-document (150) that is derived from a page-document (151) stored on the server (901), wherein a specific page-component (151-2) of the page-document (151) has a writer-function (161-2) that generates the browser-delta (151-2d) on the server (901) by applying the writer-function (161-2) to a corresponding application-delta (151-2d); and
a processor (910) updating (520) the browser-document (150) with the browser-delta (151-2d).

23. The client (900) of claim 22, wherein the memory (920) further stores a first frame (F1) and a second frame (F2); the browser-delta (151-2d) being received (510) in the first frame (F1) and the browser-document (150) being updated (520) with the browser-delta (151-2d) in the second frame (F2).
